(19) **Europäisches Patentamt / European Patent Office / Office européen des brevets**

(11) **EP 2 028 605 A1**

(12) **EUROPÄISCHE PATENTANMELDUNG**

(43) Veröffentlichungstag:
25.02.2009 Patentblatt 2009/09

(51) Int Cl.:
*G06K 9/00* (2006.01)     *G06K 9/32* (2006.01)

(21) Anmeldenummer: 07016308.4

(22) Anmeldetag: 20.08.2007

(84) Benannte Vertragsstaaten:
AT BE BG CH CY CZ DE DK EE ES FI FR GB GR HU IE IS IT LI LT LU LV MC MT NL PL PT RO SE SI SK TR
Benannte Erstreckungsstaaten:
AL BA HR MK RS

(71) Anmelder: **Delphi Technologies, Inc.**
**Troy, MI 48007 (US)**

(72) Erfinder:
• **Nunn, Christian**
**42499 Hückeswagen (DE)**
• **Müller-Schneiders, Stefan**
**40597 Düsseldorf (DE)**

(74) Vertreter: **Manitz, Finsterwald & Partner GbR**
**Postfach 31 02 20**
**80102 München (DE)**

(54) **Detektionsverfahren für symmetrische Muster**

(57) Die Erfindung betrifft ein Verfahren zur Detektion eines vorzugsweise einer Fahrbahn zugeordneten symmetrischen Gegenstandes bekannter Form, insbesondere Verkehrszeichens, in einem Bild der Umgebung im Sichtbereich einer insbesondere an einem Kraftfahrzeug angeordneten Bildaufnahmeeinrichtung, bei dem mittels der Bildaufnahmeeinrichtung ein Bild aufgenommen wird, in dem aufgenommenen Bild oder einem durch eine Bildbearbeitung aus dem aufgenommenen Bild erzeugten Bild wenigstens ein Bildpunkte umfassender Bildbereich, der jeweils ein vorgegebenes Maß an Symmetrie überschreitet, oder ein Teil hiervon ermittelt wird, anhand des wenigstens einen Bildbereichs oder des Teils hiervon für eine nachfolgende Formerkennung jeweils ein relevanter Bildausschnitt bestimmt wird, und lediglich in dem wenigstens einen relevanten Bildausschnitt jeweils die Formerkennung durchgeführt wird, um eine potentielle Abbildung des symmetrischen Gegenstandes zu detektieren.

Fig. 3

EP 2 028 605 A1

**Beschreibung**

Die vorliegende Erfindung betrifft ein Verfahren zur Detektion eines vorzugsweise einer Fahrbahn zugeordneten symmetrischen Gegenstandes bekannter Form, insbesondere Verkehrszeichens, in einem Bild der Umgebung im Sichtbereich einer insbesondere an einem Kraftfahrzeug angeordneten Bildaufnahmeeinrichtung.

Systeme zur Verkehrszeichenerkennung können dazu verwendet werden, den Fahrer eines Kraftfahrzeugs über die Verkehrszeichen an der Fahrbahn zu informieren, beispielsweise durch Projektion einer graphischen Repräsentation eines an der Fahrbahn detektierten Verkehrszeichens über ein Head-up Display auf die Frontscheibe des Kraftfahrzeugs. Systeme zur Verkehrszeichenerkennung können jedoch auch als Fahrerassistenzsysteme verwendet werden, beispielsweise um bei einer Geschwindigkeitsübertretung die Fahrgeschwindigkeit automatisch auf die zulässige Höchstgeschwindigkeit zu reduzieren.

Für die Verkehrszeichenerkennung werden Kameras eingesetzt, die die Umgebung vor dem Kraftfahrzeug aufnehmen und auf das Vorhandensein von Verkehrszeichen hin untersuchen. Eine Verkehrszeichenerkennung kann beispielsweise zweistufig durchgeführt werden. In einer ersten Stufe (Detektion) geht es dann darum, über eine Merkmalsextraktion potentielle Kandidaten für Abbildungen von Verkehrszeichen in einem aufgenommenen Bild aufzufinden. Dies kann beispielsweise mittels einer Hough-Transformation, welche der Erkennung von geometrischen Formen dient, oder mittels einer Farbsegmentierung, bei der zusammenhängende Flächen gleicher Farbe erkannt werden, erfolgen. Die zweite Stufe (Klassifikation) hat zur Aufgabe, zunächst festzustellen, ob es sich bei dem jeweiligen Kandidaten tatsächlich um eine Abbildung eines Verkehrszeichens handelt, und im bejahenden Falle dann den Typ des abgebildeten Verkehrszeichens zu bestimmen. Dies kann beispielsweise mittels eines Template Matching (Maskenvergleich) erfolgen.

Eine derartige Verkehrszeichenerkennung, welche von einer Datenverarbeitungseinrichtung ausgeführt wird, erfordert jedoch einen hohen Rechenaufwand, welcher zu einer hohen Rechenzeit führt. Darüber hinaus ist die Robustheit einer derartigen Verkehrszeichenerkennung unzureichend.

Der Erfindung liegt die Aufgabe zugrunde, eine Möglichkeit anzugeben, die Rechenzeit für die Detektion von symmetrischen Gegenständen zu verkürzen und/oder die Robustheit einer derartigen Detektion zu erhöhen.

Diese Aufgabe wird durch ein Verfahren der eingangs genannten Art gelöst, bei dem mittels der insbesondere digitalen Bildaufnahmeeinrichtung ein insbesondere digitales Bild aufgenommen wird, in dem aufgenommenen Bild oder einem durch eine Bildbearbeitung aus dem aufgenommenen Bild erzeugten Bild wenigstens ein Bildpunkte umfassender Bildbereich, der jeweils ein vorgegebenes Maß an Symmetrie überschreitet, oder ein Teil hiervon ermittelt wird, anhand des wenigstens einen Bildbereichs oder des Teils hiervon für eine nachfolgende Formerkennung jeweils ein relevanter Bildausschnitt bestimmt wird, und lediglich in dem wenigstens einen relevanten Bildausschnitt jeweils die Formerkennung durchgeführt wird, um eine potentielle Abbildung des symmetrischen Gegenstandes zu detektieren.

Die Detektion des symmetrischen Gegenstandes kann in zwei Verfahrensschritte eingeteilt werden.

Da symmetrische Gegenstände in einem Bild zu entsprechenden symmetrischen Bildbereichen führen, wird in einem ersten Verfahrensschritt in dem aufgenommenen Bild oder dem von dem aufgenommenen Bild abgeleiteten Bild nach solchen Bildbereichen gesucht, die zumindest ein gewisses Mindestmaß an Symmetrie aufweisen. Aus einem derartigen Bildbereich oder Teil hiervon wird dann der jeweils zugeordnete relevante Bildausschnitt bestimmt. Insbesondere handelt es sich bei dem Teil des Bildbereichs um eine bevorzugt vertikale Symmetrielinie des Bildbereichs. Bei dem relevanten Bildausschnitt kann es sich beispielsweise um den zugeordneten Bildbereich oder um einen Bereich handeln, der den mit einem zusätzlichen Toleranzbereich versehenen zugeordneten Bildbereich umfasst.

In einem zweiten Verfahrensschritt wird dann ausschließlich in den relevanten Bildausschnitten eine Formerkennung durchgeführt. Zur Formerkennung können an sich bekannte Verfahren verwendet werden, beispielsweise eine Hough-Transformation zur Erkennung von Kreisen und/oder ein Verfahren zur Erkennung von regulären Polygonen, wie es in Barnes et al., "Regular Polygon Detection", Tenth IEEE International Conference on Computer Vision (ICCV), 778, 2005 beschrieben ist.

Über die Formerkennung können potentielle Abbildungen der insbesondere unbewegten symmetrischen Gegenstände bekannter Form ermittelt werden, welche dann in einer nachfolgenden Klassifikation, beispielsweise mittels Template Matching, verifiziert und erkannt werden können.

Die der Formdetektion vorgeschaltete Symmetriedetektion ermöglicht, die Rechenzeit für die Formdetektion erheblich zu verkürzen, da diese dann nicht mehr über das gesamte Bild hinweg durchgeführt werden muss, sondern auf wenige relevante Bildausschnitte beschränkt werden kann. Darüber hinaus enthält ein jeder der Bildbereiche oder ein jedes der Teile hiervon bereits eine Vorhersage über die zu erwartende Größe der Abbildung eines symmetrischen Gegenstandes, wobei sich die zu erwartende Größe unmittelbar aus der Größe des jeweiligen Bildbereichs oder Teils hiervon ergibt. Die zusätzliche Symmetriedetektion erfordert eine vergleichsweise geringe Rechenzeit, die von dem Gewinn an Rechenzeit bei der Formdetektion um ein Vielfaches übertroffen wird. Darüber hinaus wird durch die vorgeschaltete Symmetriedetektion die Robustheit der Gesamtdetektion erhöht.

Bevorzugt wird der wenigstens eine Bildbereich oder der Teil hiervon in einem durch eine Bildbearbeitung erzeugten Bild ermittelt, wobei zur Erzeugung des bearbeiteten Bildes eine Kantenerkennung oder Kantendetektion durchgeführt wird. Zur Kantendetektion können an sich bekannte Verfahren verwendet werden, beispielsweise bekannte Kantenfilter wie der Sobel-Operator. Bei dem erzeugten Bild handelt es sich bevorzugt um ein binäres Kantenbild oder ein Gradientenbild, in dem die Kanten der Abbildungen der symmetrischen Gegenstände, soweit solche in dem aufgenommenen Bild vorhanden sind, hervorgehoben sind. Die nachfolgende Symmetriedetektion kann dann anhand des Gradientenbildes oder des binären Kantenbildes durchgeführt werden, wodurch die Rechenzeit für die Symmetriedetektion reduziert werden kann. Bei einem Gradientenbild, handelt es sich um ein Bild, in dem den Bildpunkten jeweils ein Gradientenvektor, d.h. ein Gradientenwert und eine Gradientenrichtung, zugeordnet ist.

Darüber hinaus kann die Symmetrie einer Abbildung eines Gegenstandes in einem aufgenommenen Bild, insbesondere in einem aufgenommenen Grauwertbild oder in einem aus einem aufgenommenen Bild erzeugten Grauwertbild, durch Beleuchtungsinhomogenitäten gestört werden. Beispielsweise können bei einem seitlichen Lichteinfall verschiedene Bereiche der Abbildung unterschiedlich hell erscheinen. Ein Gradientenbild oder binäres Kantenbild ist gegenüber derartigen Störungen weniger empfindlich. Hierdurch wird die Robustheit der Gesamtdetektion weiter erhöht.

Nach einer Ausgestaltung der Erfindung wird für den wenigstens einen Bildbereich jeweils das Symmetriemaß durch Vergleich der Gradientenvektoren der bezüglich einer Linie einander gegenüberliegenden Bildpunkte des Gradientenbildes bestimmt. Dies ermöglicht, Symmetrien zuverlässig zu erkennen, da bei dem Vergleich der einander gegenüberliegenden Bildpunkte auch die Gradientenrichtungen der jeweiligen Bildpunkte berücksichtigt werden können, so dass bei einander gegenüberliegenden Bildpunkten, die zwar in ihren Gradientenwerten übereinstimmen oder einander ähnlich sind, deren Gradientenrichtungen aber nicht zumindest annähernd spiegelsymmetrisch zu der Linie orientiert sind, ein bezüglich der jeweiligen Bildpunkte geringer Symmetriewert resultiert. Grundsätzlich kann zur Bestimmung des Symmetriemaßes jedoch auch jedes andere und/oder aus dem Stand der Technik bekannte Verfahren verwendet werden.

Bevorzugt weist der wenigstens eine Bildbereich jeweils eine Spiegelsymmetrie auf, insbesondere bezüglich einer bevorzugt vertikalen Symmetrielinie bzw. Achse. Dies ist insbesondere deshalb von Vorteil, da die meisten einer Fahrbahn zugeordneten symmetrischen Gegenstände, insbesondere runde oder dreieckige Verkehrszeichen, bezüglich einer vertikalen Achse symmetrisch bzw. spiegelsymmetrisch aufgebaut sind.

Nach einer anderen Ausgestaltung der Erfindung wird die Ermittlung des wenigstens einen Bildbereichs oder des Teils hiervon nur in einer ausgewählten Region oder "Region of Interest" des aufgenommenen oder erzeugten Bildes durchgeführt. Der Ermittlung des wenigstens eines Bildbereichs oder des Teils hiervon kann also ein Verfahrensschritt vorgeschaltet sein, der eine Region vorauswählt, in der zu detektierende symmetrische Gegenstände überhaupt vorkommen können. In der nicht ausgewählten Region des aufgenommenen bzw. erzeugten Bildes hingegen sind keine symmetrischen Gegenstände zu erwarten, so dass hier eine Detektion auch nicht durchgeführt zu werden braucht. Hierdurch kann die Rechenzeit für die nachfolgende Symmetriedetektion reduziert werden. Die ausgewählte Region und/oder die nicht ausgewählte Region kann durch mehrere nicht zusammenhängende Teilregionen gebildet sein. Ein Verfahren zur Bestimmung einer ausgewählten Region ist beispielsweise in der von der Anmelderin am 30. Juli 2007 beim Europäischen Patentamt eingereichten europäischen Patentanmeldung mit der Anmeldenummer 07 014 924.0 und der Bezeichnung "Verfahren für eine Erkennung eines Gegenstandes", deren diesbezüglicher Inhalt hiermit durch Bezugnahme in diese Anmeldung aufgenommen wird, beschrieben.

Bevorzugt wird die Ermittlung des wenigstens einen Bildbereichs oder des Teils hiervon und/oder die Bestimmung des wenigstens einen relevanten Bildausschnitts unter Berücksichtigung einer Vorhersage über die zu erwartende Größe der Abbildung des Gegenstandes durchgeführt. Hierdurch kann die Rechenzeit für die Ermittlung des wenigstens einen Bildbereichs oder des Teils hiervon und/oder für die nachfolgende Formdetektion reduziert werden. Die Vorhersage kann sich unmittelbar aus der Größe des jeweiligen Bildbereichs oder Teils hiervon ergeben, wie vorstehend beschrieben ist. Ein anderes Verfahren zur Vorhersage der zu erwartenden Größe der Abbildung des Gegenstandes ist in der vorgenannten, von der Anmelderin am 30. Juli 2007 beim Europäischen Patentamt eingereichten europäischen Patentanmeldung mit der Anmeldenummer 07 014 924.0 und der Bezeichnung "Verfahren für eine Erkennung eines Gegenstandes", deren diesbezüglicher Inhalt hiermit durch Bezugnahme in diese Anmeldung aufgenommen wird, beschrieben.

Weiterer Gegenstand der Erfindung ist ein Computerprogramm mit Programmcode-Mitteln, um das vorstehend beschriebene Verfahren durchzuführen, wenn das Programm auf einem Computer oder einer entsprechenden Recheneinheit ausgeführt wird.

Gegenstand der Erfindung ist auch ein Computerprogrammprodukt mit Programmcode-Mitteln, die auf einem computerlesbaren Datenträger gespeichert sind, um das vorstehend beschriebene Verfahren durchzuführen, wenn das Computerprogramm auf einem Computer oder einer entsprechenden Recheneinheit ausgeführt wird.

Unter einem Computer wird hierbei eine beliebige Datenverarbeitungsvorrichtung verstanden, mit der das Verfahren ausgeführt werden kann. Insbesondere können diese digitale Signalprozessoren und/oder Mikroprozessoren aufweisen, mit denen das Verfahren ganz oder in Teilen ausgeführt wird.

Schließlich ist Gegenstand der Erfindung eine Vorrichtung zur Detektion eines vorzugsweise einer Fahrbahn zugeordneten symmetrischen Gegenstandes bekannter Form, insbesondere Verkehrszeichens, in einem Bild der Umgebung im Sichtbereich einer insbesondere an einem Kraftfahrzeug angeordneten Bildaufnahmeeinrichtung, mit einer Kameraeinrichtung zur Aufnahme eines Bildes, und mit einer Datenverarbeitungseinrichtung, die zur Durchführung des vorstehend beschriebenen Verfahrens ausgebildet ist.

Weitere vorteilhafte Ausführungsformen der Erfindung sind in den Unteransprüchen, der Beschreibung und der Zeichnung angegeben.

Die Erfindung wird im Folgenden beispielhaft unter Bezugnahme auf die Zeichnung beschrieben.

Es zeigen, jeweils in schematischer Darstellung,

Fig. 1 ein Blockdiagramm, in dem mehrere Verfahrensschritte zur Detektion von symmetrischen Gegenständen dargestellt sind,

Fig. 2 Bildpunkte eines Bildbereichs zur Veranschaulichung der Bestimmung eines Symmetriemaßes, und

Fig. 3 ein aus einem mittels einer digitalen Videokamera aufgenom- menen Bild erzeugtes Gradientenbild, in dem vertikale Sym- metrielinien dargestellt sind.

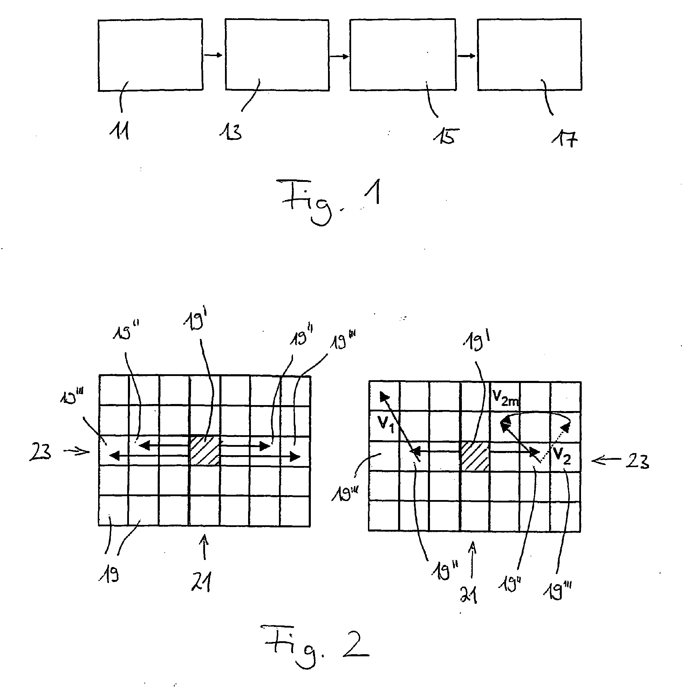

In Fig. 1 ist die Detektionsstufe eines Verfahrens zur Verkehrszeichenerkennung dargestellt.

Hierzu wird in einem ersten Verfahrensschritt 11 zunächst ein Grauwertbild der Umgebung im Sichtbereich einer an einem Kraftfahrzeug angeordneten digitalen Videokamera aufgenommen. Grundsätzlich kann jedoch auch ein Farbbild aufgenommen werden, welches anschließend in ein Grauwertbild umgewandelt wird.

Danach wird das Grauwertbild in einem zweiten Verfahrensschritt 13 mittels eines Sobel-Operators einer Kantenerkennung unterzogen, wobei ein Gradientenbild resultiert. Das Gradientenbild zeichnet sich dadurch aus, dass jedem Bildpunkt bzw. Pixel des Gradientenbildes ein Gradientenvektor, d.h. ein Gradientenwert und eine Gradientenrichtung, zugeordnet ist. Zuvor oder anschließend wird in dem Grauwertbild oder dem Gradientenbild eine ausgewählte Region (Region of Interest) bestimmt, in der Verkehrszeichen grundsätzlich vorkommen können. Dabei wird davon ausgegangen, dass in der nicht ausgewählten Region keine Verkehrszeichen vorkommen können. Die Bestimmung der ausgewählten Region ist grundsätzlich bekannt und beispielsweise in der vorgenannten europäischen Patentanmeldung (Anmeldenummer 07 014 924.0) beschrieben.

Anschließend werden in einem dritten Verfahrensschritt 15 in der ausgewählten Region des Gradientenbildes vertikale Symmetrielinien für Bildbereiche gesucht, die jeweils ein vorgegebenes Maß an horizontaler Spiegelsymmetrie überschreiten, wie nachfolgend anhand von Fig. 2 noch näher erläutert ist. Jedem der vertikalen Symmetrielinien wird dann jeweils ein relevanter Bildausschnitt aus dem Gradientenbild zugewiesen. Der jeweilige relevante Bildausschnitt entspricht im Wesentlichen demjenigen Bildbereich, für den die jeweilige Symmetrielinie ermittelt wurde, ist diesem gegenüber jedoch um einen Toleranzbereich räumlich erweitert.

Schließlich wird in einem vierten Verfahrensschritt 17, und zwar ausschließlich im Bereich der relevanten Bildausschnitte, welche die vertikalen Symmetrielinien umfassen, jeweils eine Formdetektion durchgeführt. Eine Formdetektion in einem Gradientenbild, beispielsweise mittels einer Hough-Transformation, ist aus dem Stand der Technik grundsätzlich bekannt. Die Formdetektion wird dabei dadurch erleichtert, dass der relevante Bildausschnitt jeweils mit einer an dieser Stelle des Gradientenbildes zu erwartenden Größe eines Verkehrszeichens versehen ist. Die zu erwartende Größe wird aus der Größe der jeweiligen vertikalen Symmetrielinie und einer Vorhersage über die zu erwartende Größe im Bereich des jeweiligen Bildausschnitts gemäß dem in der vorgenannten europäischen Patentanmeldung (Anmeldenummer 07 014 924.0) beschriebenen Verfahren bestimmt.

Um die vorgenannten Symmetrielinien zu finden, wird innerhalb der ausgewählten Region jede Spalte des Gradientenbildes daraufhin überprüft, ob die jeweilige Spalte oder ein Abschnitt hiervon eine vertikale Symmetrielinie für einen bestimmten Bildbereich darstellt. Dies ist in Fig. 2 veranschaulicht, in der mehrere zusammenhängende, in Reihen und Spalten angeordnete Pixel 19 dargestellt sind. Um beispielsweise für Spalte 21 festzustellen, ob diese eine vertikale Symmetrielinie beinhaltet, wird jedes innerhalb der ausgewählten Region befindliche Pixel der Spalte 21 daraufhin untersucht, ob die dem jeweiligen Pixel zugeordnete Zeile innerhalb der ausgewählten Region eine horizontale Spiegelsymmetrie aufweist.

Dies ist in Fig. 2 anhand des Pixel 19' der Spalte 21 veranschaulicht, wobei Pixel 19' in Zeile 23 angeordnet ist. Zur Überprüfung, ob die Zeile 23 innerhalb der ausgewählten Region bezüglich dem Pixel 19' ein vorgegebenes Maß an Spiegelsymmetrie überschreitet, werden jeweils zwei, davon eines links und eines rechts des Pixels 19' angeordnete Pixel, die denselben Abstand r zu dem Pixel 19' besitzen, miteinander verglichen. Beispielsweise werden die beiden Pixel 19", welche jeweils um r = 2 Pixel gegenüber dem Pixel 19' horizontal versetzt sind, oder die beiden Pixel 19''', welche jeweils um r = 3 Pixel gegenüber dem Pixel 19' horizontal versetzt sind, miteinander verglichen.

Dabei werden jeweils zwei von dem Pixel 19' gleichbeabstandete Pixel miteinander verglichen, deren Abstand in einem Intervall zwischen einem minimalen Abstand $r_{min}$ und einem maximalen Abstand $r_{max}$ zu dem Pixel 19' liegt. Die Grenzen $r_{min}$ und $r_{max}$ des Intervalls werden in Abhängigkeit von der Größe und Form der zu detektierenden Verkehrszeichen gewählt. Hierbei wird eine Vorhersage über die zu erwartende Größe von Verkehrszeichen, wie sie beispielsweise in der vorgenannten europäischen Patentanmeldung (Anmeldenummer 07 014 924.0) beschrieben ist, berücksichtigt.

Der Vergleich der beiden jeweiligen Pixel, beispielsweise der beiden Pixel 19" oder 19"', erfolgt jeweils durch Bildung des Skalarprodukts aus dem Gradientenvektor $v_1$ des einen der beiden Pixel und einem Gradientenvektor $v_{2m}$, der durch Spiegelung des Gradientenvektors $v_2$ des anderen der beiden Pixel um eine vertikale Achse entstanden ist:

$$\bar{v}_1 \cdot \bar{v}_{2m} = v_1 \cdot v_{2m} \cos \angle \left( \bar{v}_1, \bar{v}_{2m} \right)$$

Gehören die beiden Pixel jeweils zu einer Kante, d.h. weisen die beiden Pixel jeweils einen hohen Gradientenwert $v_1$, $v_{2m}$ auf, ergibt sich ein entsprechend hoher Wert für das Produkt aus den beiden Gradientenwerten $v_1$, $v_{2m}$. Ein hoher Wert für dieses Produkt lässt ein hohes Maß an Spiegelsymmetrie der beiden Pixel bezüglich der Spalte 21 vermuten. Weisen die beiden Pixel zwar jeweils einen hohen Gradientenwert $v_1$, $v_{2m}$ auf, sind die Gradientenrichtungen der beide Pixel bezüglich der Spalte 21 jedoch nicht spiegelsymmetrisch zueinander orientiert, d.h. gehören die beiden Pixel nicht zu exakt spiegelsymmetrischen Kanten, ergibt sich ein entsprechend kleiner cos-Wert (kleiner 1), so dass auch das Vektorprodukt und damit das Maß an Spiegelsymmetrie der beiden Pixel reduziert wird.

Das Vektorprodukt wird für alle Pixelpaare der Zeile 23 innerhalb des Intervalls [$r_{min}$, $r_{max}$] gebildet. Anschließend werden die Vektorprodukte aufaddiert. Liegt die Summe der Vektorprodukte der Pixelpaare der Zeile 23 innerhalb des Intervalls [$r_{min}$, $r_{max}$] oberhalb eines Schwellwerts, wird das Pixel 19' als Symmetriezentrum für die Pixel der Zeile 23 innerhalb des Intervalls [$r_{min}$, $r_{max}$] erkannt.

Die in Spalte 21 über und unter dem Pixel 19' liegenden Pixel werden entsprechend untersucht. Dabei bilden zusammenhängende Pixel der Spalte 21, die jeweils als Symmetriezentrum erkannt wurden, eine Symmetrielinie im Sinne der vorliegenden Anmeldung, wobei die Symmetrielinie folglich einem Bildbereich zugeordnet ist, der ein vorgegebenes Maß an Symmetrie überschreitet. Der Robustheit des Verfahrens halber können bei der Bildung einer Symmetrielinie vereinzelt auch Pixel berücksichtigt werden, die nicht als Symmetriezentrum erkannt wurden.

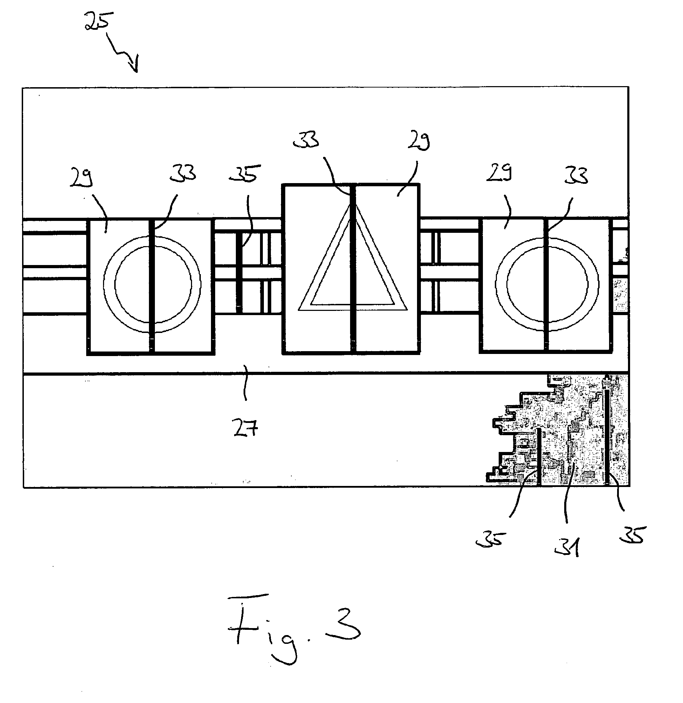

In Fig. 3 ist ein vereinfacht dargestelltes, aus einem mittels der digitalen Videokamera aufgenommenen Grauwertbild erzeugtes Gradientenbild 25 gezeigt, das eine Schilderbrücke 27 über einer Autobahn zeigt, wobei an der Schilderbrücke 27 drei Verkehrszeichen 29 montiert sind. In dem rechten Randbereich des Gradientenbildes 25 ist rechts neben der Autobahn befindliches Gebüsch 31 angedeutet. Den Abbildungen 29 der Verkehrszeichen in dem Gradientenbild 25 sind Symmetrielinien 33 zugeordnet. Darüber hinaus sind weitere Symmetrielinien 35 dargestellt, die zwar symmetrischen Bildbereichen bzw. Bildausschnitten, jedoch keinen Abbildungen von Verkehrszeichen zugeordnet sind. Die Symmetrielinien wurden jeweils wie vorstehend beschrieben bestimmt.

Mittels der nachfolgenden Formdetektion 17 können dann die runden bzw. dreieckigen Formen der Abbildungen 29 der Verkehrszeichen erkannt werden. Für die Symmetrielinien 35 hingegen wird die nachfolgende Formdetektion 17 oder eine nachfolgende Klassifikationsstufe feststellen, dass in den den Symmetrielinien 35 zugeordneten Bildbereichen bzw. Bildausschnitten keine Verkehrszeichen abgebildet sind.

Die vorstehend beschriebene Symmetriedetektion ermöglicht, eine Verkehrszeichendetektion schneller und mit einer höheren Robustheit durchzuführen.

Bezugszeichenliste

| | |
|---|---|
| 11 | erster Verfahrensschritt |
| 13 | zweiter Verfahrensschritt |
| 15 | dritter Verfahrensschritt |
| 17 | vierter Verfahrensschritt |
| 19 | Pixel |
| 21 | Spalte |
| 23 | Zeile |
| 25 | Gradientenbild |
| 27 | Schilderbrücke |
| 29 | Verkehrszeichen |
| 31 | Gebüsch |
| 33 | Symmetrielinie |
| 35 | Symmetrielinie |
| r | Abstand |
| $r_{max}$ | maximaler Abstand |
| $r_{min}$ | minimaler Abstand |
| $v_1$ | Gradientenvektor |
| $v_2$ | Gradientenvektor |
| $v_{2m}$ | gespiegelter Gradientenvektor |
| $v_1$ | Betrag |
| $v_{2m}$ | Betrag |

**Patentansprüche**

**1.** Verfahren zur Detektion eines vorzugsweise einer Fahrbahn zugeordneten symmetrischen Gegenstandes bekannter Form, insbesondere Verkehrszeichens, in einem Bild (25) der Umgebung im Sichtbereich einer insbesondere an einem Kraftfahrzeug angeordneten Bildaufnahmeeinrichtung, bei dem mittels der Bildaufnahmeeinrichtung ein Bild aufgenommen wird (11),
in dem aufgenommenen Bild oder einem durch eine Bildbearbeitung aus dem aufgenommenen Bild erzeugten Bild (25) wenigstens ein Bildpunkte (19) umfassender Bildbereich, der jeweils ein vorgegebenes Maß an Symmetrie überschreitet, oder ein Teil (33, 35) hiervon ermittelt wird (15),
anhand des wenigstens einen Bildbereichs oder des Teils (33, 35) hiervon für eine nachfolgende Formerkennung (17) jeweils ein relevanter Bildausschnitt bestimmt wird, und
lediglich in dem wenigstens einen relevanten Bildausschnitt jeweils die Formerkennung (17) durchgeführt wird, um eine potentielle Abbildung (29) des symmetrischen Gegenstandes zu detektieren.

**2.** Verfahren nach Anspruch 1,
**dadurch gekennzeichnet,**
**dass** zur Erzeugung des bearbeiteten Bildes (25) eine Kantenerkennung durchgeführt wird (13), wobei bevorzugt ein insbesondere Gradientenvektoren umfassendes Gradientenbild (25) oder ein binäres Kantenbild entsteht.

**3.** Verfahren nach Anspruch 2,
**dadurch gekennzeichnet,**
**dass** für den wenigstens einen Bildbereich jeweils das Maß an Symmetrie durch Vergleich der Gradientenvektoren der bezüglich einer Linie (33, 35) einander gegenüberliegenden Bildpunkte (19) des Gradientenbildes (25) bestimmt wird.

**4.** Verfahren nach einem der vorstehenden Ansprüche,
**dadurch gekennzeichnet,**
**dass** der wenigstens eine Bildbereich jeweils eine Spiegelsymmetrie aufweist, insbesondere bezüglich einer bevorzugt vertikalen Symmetrielinie (33, 35).

**5.** Verfahren nach einem der vorstehenden Ansprüche,
**dadurch gekennzeichnet,**
**dass** die Ermittlung des wenigstens einen Bildbereichs oder des Teils (33, 35) hiervon nur in einer ausgewählten Region des aufgenommenen oder erzeugten Bildes (25) durchgeführt wird.

**6.** Verfahren nach einem der vorstehenden Ansprüche,
**dadurch gekennzeichnet,**
**dass** die Ermittlung des wenigstens einen Bildbereichs oder des Teils (33, 35) hiervon unter Berücksichtigung einer Vorhersage über die zu erwartende Größe der Abbildung (29) des Gegenstandes durchgeführt wird.

**7.** Verfahren nach einem der vorstehenden Ansprüche,
**dadurch gekennzeichnet,**
**dass** die Bestimmung des wenigstens einen relevanten Bildausschnitts unter Berücksichtigung einer Vorhersage über die zu erwartende Größe der Abbildung (29) des Gegenstandes durchgeführt wird.

**8.** Computerprogramm mit Programmcodemitteln zur Durchführung des Verfahrens nach einem der Ansprüche 1 bis 7, wenn das Computerprogramm auf einem Computer oder einer entsprechenden Recheneinheit ausgeführt wird.

**9.** Computerprogrammprodukt mit Programmcodemitteln, die auf einem computerlesbaren Datenträger gespeichert sind, zur Durchführung des Verfahrens nach einem der Ansprüche 1 bis 7, wenn das Computerprogramm auf einem Computer oder einer entsprechenden Recheneinheit ausgeführt wird.

**10.** Vorrichtung zur Detektion eines vorzugsweise einer Fahrbahn zugeordneten symmetrischen Gegenstandes bekannter Form, insbesondere Verkehrszeichens, in einem Bild (25) der Umgebung im Sichtbereich einer insbesondere an einem Kraftfahrzeug angeordneten Bildaufnahmeeinrichtung, mit einer Kameraeinrichtung zur Aufnahme eines Bildes, und mit einer Datenverarbeitungseinrichtung, die zur Durchführung des Verfahrens nach einem der Ansprüche 1 bis 7 ausgebildet ist.

**Geänderte Patentansprüche gemäss Regel 137(2) EPÜ.**

**1.** Verfahren zur Detektion eines symmetrischen Gegenstandes bekannter Form, insbesondere Verkehrszeichens, in einem Bild (25) der Umgebung im Sichtbereich einer Bildaufnahmeeinrichtung, bei dem
mittels der Bildaufnahmeeinrichtung ein Bild aufgenommen wird (11),
in dem aufgenommenen Bild oder einem durch eine Bildbearbeitung aus dem aufgenommenen Bild erzeugten Bild (25) wenigstens ein Bildpunkte (19) umfassender Bildbereich, der jeweils ein vorgegebenes Maß an Symmetrie überschreitet, oder ein Teil (33, 35) hiervon ermittelt wird (15),
anhand des wenigstens einen Bildbereichs oder des Teils (33, 35) hiervon für eine nachfolgende Formerkennung (17) jeweils ein relevanter Bildausschnitt bestimmt wird, und
lediglich in dem wenigstens einen relevanten Bildausschnitt jeweils die Formerkennung (17) durchgeführt wird, um eine potentielle Abbildung (29) des symmetrischen Gegenstandes zu detektieren.

**2.** Verfahren nach Anspruch 1,
**dadurch gekennzeichnet,**
**dass** zur Erzeugung des bearbeiteten Bildes (25) eine Kantenerkennung durchgeführt wird (13), wobei bevorzugt ein insbesondere Gradientenvektoren umfassendes Gradientenbild (25) oder ein binäres Kantenbild entsteht.

**3.** Verfahren nach Anspruch 2,
**dadurch gekennzeichnet,**
**dass** für den wenigstens einen Bildbereich jeweils das Maß an Symmetrie durch Vergleich der Gradientenvektoren der bezüglich einer Linie (33, 35) einander gegenüberliegenden Bildpunkte (19) des Gradientenbildes (25) bestimmt wird.

**4.** Verfahren nach einem der vorstehenden Ansprüche,
**dadurch gekennzeichnet,**
**dass** die besagte Symmetrie eine Spiegelsymmetrie ist, insbesondere bezüglich einer bevorzugt vertikalen Symmetrielinie (33, 35).

**5.** Verfahren nach einem der vorstehenden Ansprüche,
**dadurch gekennzeichnet,**
**dass** die Ermittlung des wenigstens einen Bildbereichs oder des Teils (33, 35) hiervon nur in einer ausgewählten Region des aufgenommenen oder erzeugten Bildes (25) durchgeführt wird.

**6.** Verfahren nach einem der vorstehenden Ansprüche,
**dadurch gekennzeichnet,**
**dass** die Ermittlung des wenigstens einen Bildbereichs oder des Teils (33, 35) hiervon unter Berücksichtigung einer Vorhersage über die zu erwartende Größe der Abbildung (29) des Gegenstandes durchgeführt wird.

**7.** Verfahren nach einem der vorstehenden Ansprüche,
**dadurch gekennzeichnet,**
**dass** die Bestimmung des wenigstens einen relevanten Bildausschnitts unter Berücksichtigung einer Vorhersage über die zu erwartende Größe der Abbildung (29) des Gegenstandes durchgeführt wird.

**8.** Computerprogramm mit Programmcodemitteln zur Durchführung des Verfahrens nach einem der Ansprüche 1 bis 7, wenn das Computerprogramm auf einem Computer oder einer entsprechenden Recheneinheit ausgeführt wird.

**9.** Computerprogrammprodukt mit Programmcodemitteln, die auf einem computerlesbaren Datenträger gespeichert sind, zur Durchführung des Verfahrens nach einem der Ansprüche 1 bis 7, wenn das Computerprogramm auf einem Computer oder einer entsprechenden Recheneinheit ausgeführt wird.

**10.** Vorrichtung zur Detektion eines symmetrischen Gegenstandes bekannter Form, insbesondere Verkehrszeichens, in einem Bild (25) der Umgebung im Sichtbereich einer Bildaufnahmeeinrichtung, mit einer Kameraeinrichtung zur Aufnahme eines Bildes, und mit einer Datenverarbeitungseinrichtung, die zur Durchführung des Verfahrens nach einem der Ansprüche 1 bis 7 ausgebildet ist.

Fig. 1

Fig. 2

Fig. 3

**Europäisches Patentamt**

## EUROPÄISCHER RECHERCHENBERICHT

Nummer der Anmeldung

EP 07 01 6308

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BARNES N ET AL: "Real-time radial symmetry for speed sign detection" INTELLIGENT VEHICLES SYMPOSIUM, 2004 IEEE PARMA, ITALY JUNE 14-17, 2004, PISCATAWAY, NJ, USA,IEEE, 14. Juni 2004 (2004-06-14), Seiten 566-571, XP010727709 ISBN: 0-7803-8310-9 | 1,2,8-10 | INV. G06K9/00 G06K9/32 |
| Y | * das ganze Dokument * | 3-7 | |
| Y | REISFELD D ET AL: "CONTEXT-FREE ATTENTIONAL OPERATORS: THE GENERALIZED SYMMETRY TRANSFORM" INTERNATIONAL JOURNAL OF COMPUTER VISION, KLUWER ACADEMIC PUBLISHERS, NORWELL, US, Bd. 14, Nr. 2, 1. März 1995 (1995-03-01), Seiten 119-130, XP000495897 ISSN: 0920-5691 * Abschnitte: 2: "Attentional Mechanisms in Computer Vision" 3: "Definition of the Transform" * S. 128, rechte Spalte, letztes Drittel | 3-7 | |
| A | KUEHNLE A: "SYMMETRY-BASED RECOGNITION OF VEHICLE REARS" PATTERN RECOGNITION LETTERS, NORTH-HOLLAND PUBL. AMSTERDAM, NL, Bd. 12, Nr. 4, 1. April 1991 (1991-04-01), Seiten 249-258, XP000206854 ISSN: 0167-8655 * Abschnitte: 1. "Introduction" 2. "Gradient of an Image" 3. "Orientation of the symmetry axis" 4. "Position of the symmetry axis" * | 3-7 | RECHERCHIERTE SACHGEBIETE (IPC) G06K G06T |

-/--

Der vorliegende Recherchenbericht wurde für alle Patentansprüche erstellt

| Recherchenort | Abschlußdatum der Recherche | Prüfer |
|---|---|---|
| Den Haag | 30. Oktober 2007 | Neubüser, Bernhard |

**Europäisches Patentamt**

# EUROPÄISCHER RECHERCHENBERICHT

Nummer der Anmeldung

EP 07 01 6308

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | SUN C: "Symmetry detection using gradient information" PATTERN RECOGNITION LETTERS, NORTH-HOLLAND PUBL. AMSTERDAM, NL, Bd. 16, Nr. 9, September 1995 (1995-09), Seiten 987-996, XP004062477 ISSN: 0167-8655 * Zusammenfassung Abschnitte: 1. "Introduction" 2. "Symmetry criteria" * ----- | 3-7 | |
| A | LOY G ET AL: "Fast shape-based road sign detection for a driver assistance system" INTELLIGENT ROBOTS AND SYSTEMS, 2004. (IROS 2004). PROCEEDINGS. 2004 IEEE/RSJ INTERNATIONAL CONFERENCE ON SENDAI, JAPAN 28 SEPT.-2 OCT., 2004, PISCATAWAY, NJ, USA,IEEE, Bd. 1, 28. September 2004 (2004-09-28), Seiten 70-75, XP010765785 ISBN: 0-7803-8463-6 * Abschnitte: II. "Background" IV. "Detecting Road Sign Candidates" * ----- | 1-10 | |
| | | | RECHERCHIERTE SACHGEBIETE (IPC) |
| A | FORSYTH D A; PONCE J: "Computer Vision : a Modern Approach , PASSAGE p.571-573" 2003, PRENTICE HALL , UPPER SADDLE RIVER, NJ, PEARSON, US 299960 , XP002456993 ISBN: 0-13-191193-7 * Seite 573 * ----- | 3-7 | |

Der vorliegende Recherchenbericht wurde für alle Patentansprüche erstellt

| Recherchenort | Abschlußdatum der Recherche | Prüfer |
|---|---|---|
| Den Haag | 30. Oktober 2007 | Neubüser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 07014924 A

### In der Beschreibung aufgeführte Nicht-Patentliteratur

- **BARNES et al.** Regular Polygon Detection. *Tenth IEEE International Conference on Computer Vision (ICCV,* 2005, 778